# EUROPEAN PATENT APPLICATION

(11) **EP 3 848 866 A1**
(43) Date of publication of application: **14.07.2021**
(21) Application number: 20150920.5
(22) Date of filing: 09.01.2020
(51) Int. Cl.: G06Q 10/06

(54) **METHOD AND SYSTEM FOR MANAGING ENGINEERING WORKFLOW IN A CLOUD COMPUTING ENVIRONMENT**

(71) Applicant: Siemens Aktiengesellschaft, 80333 München (DE)
(72) Inventor: UPPUNDA, Prashanth, 560083 Bangalore, Karnataka (IN); SANTHAKUMAR, Yuvaraj, 560099 Bangalore (IN)
(74) Representative: Isarpatent

(57) **Abstract**

A method and system for managing engineering workflows in a cloud computing environment is disclosed. The method includes receiving a request for performing an engineering process in an engineering project associated with a technical installation. The method further includes determining one or more engineering objects required for performing the engineering process based on the received request. Further, the method includes generating an engineering workflow for performing the engineering process in the engineering project based on the determined one or more engineering objects. The engineering workflow represents at least a portion of the engineering process. The engineering workflow comprises one or more connections between the one or more engineering objects. Also, the method includes generating a modified engineering project based on the generated engineering workflow by performing the engineering process in the engineering project on a visual platform. Additionally, the method includes outputting the generated engineering workflow and the modified engineering project on a graphical user interface.

## Description

The present invention relates to cloud computing systems and more particularly relates to a method and system for managing engineering workflows in a cloud computing environment.

Management and controlling of tasks in product and engineering project business is important for maintenance and service, modernization and, if necessary, scrapping of products as well as plants, i.e. during the whole lifecycle of products and plants. Usually, a project plan is defined where an engineering project workflow system can be used in which the project plans are implemented as workflows which have to be executed during the engineering project. Conventional engineering tools provides an application programming interface (API) such that engineering application developers can write automated workflows using standard programming languages. Such engineering APIs provide only a basic support of a workflow by providing engineering actions, tasks, documents or models in a defined sequence. The composition of a workflow is done manually. In general, a workflow comprises some engineering objects which are assigned to specific roles or directly to experts in the project and which are started automatically based on preconditions that have to be fulfilled. For example, a preceding activity has to be finished before the next activity starts. For example, the workflow may be to automatically convert from one vendor format to another vendor format , or automatic generation of function blocks based on predefined data, or automatic generation of human machine interface (HMI) screens based on predefined data, or exporting of hardware configuration format for other engineering discipline tools to use. When customizing, these workflows are programmed by experts into the engineering tool by supplementing the source code of the engineering tool. This naturally leads to customer-specific and product-dependent results. Moreover, the generated workflows can only with difficulty and corresponding expert knowledge be retracked to the original product core.

Accordingly, conventional engineering tools do not provide any systematic support for a user or an expert of the respective application domain of the engineering tool to compose or assemble his own individual workflows from workflow steps and basic functions of the engineering tool.

Further, conventional engineering APIs require a specific version of engineering application to be installed on the same system as the system where the user writes the engineering workflow application or execute the engineering workflow application.

In light of above, there is a need for an improved method and system for generating engineering workflows.

Therefore, it is an object of the present invention to provide a method and system for managing engineering workflows in a cloud computing environment.

The object of the present invention is achieved by a method for managing engineering workflows in a cloud computing environment. The method comprises receiving a request for performing an engineering process in an engineering project associated with a technical installation. The engineering process comprises a technical process within the technical installation 106. For example, the engineering process may be to auto correct naming conventions in an engineering project A. The engineering project comprises one or more engineering objects representing one or more asset(s) deployed in the technical installation. In an embodiment, the engineering project file comprises general configuration information such as hardware configuration and programming information such as programmable logic controller (PLC) control logic implementation.

The method further comprises determining one or more engineering objects required for performing the engineering process based on the received request. The one or more engineering objects represents one or more assets in the technical installation. The one or more engineering objects comprises a control program desired to be deployed on the asset(s) in the technical installation. The one or more engineering objects represents a function associated with one or more hardware component(s) and software component. The one or more engineering objects comprises one or more parameter values associated with the hardware component(s) and software component(s). Examples of such function includes application open, application close, engineering project open, engineering project close, export tags, project auto correct tags, and the like.

Further, the method comprises generating an engineering workflow for performing the engineering process in the engineering project based on the determined one or more engineering objects. The engineering workflow represents at least a portion of the engineering process. The engineering workflow comprises one or more connections between the one or more engineering objects. In a preferred embodiment, the engineering workflow comprises one or more engineering objects connected in a specified form to perform a specific engineering process.

Furthermore, the method comprises generating a modified engineering project based on the generated engineering workflow by performing the engineering process in the engineering project on a visual platform. The visual platform may be a for example, a Node Red Platform. The modified engineering project comprises the modified engineering object as defined in the generated engineering workflow. Additionally, the method comprises outputting the generated engineering workflow and the modified engineering project on a graphical user interface. The modified engineering project comprises modified one or more engineering objects.

In determining the one or more engineering objects required for performing the engineering process in the engineering project based on the received request, the method comprises identifying requirement associated with the engineering process in the engineering project by parsing the received request. The requirement indicates the one or more engineering objects required for performing the engineering process. Further, the method comprises comparing the engineering objects in the identified requirement with one or more pre-stored engineering objects. Also, the method comprises determining the one or more pre-stored engineering objects corresponding to the identified requirement based on the comparison.

In generating the engineering workflow for performing the engineering process in the engineering project based on the determined one or more engineering objects, the method comprises identifying a sequence of engineering actions required for performing the engineering process in the engineering project based on the determined one or more engineering objects. Each of the engineering actions are associated with the determined one or more engineering objects. The sequence of engineering actions may comprise tasks associated with the one or more asset (s) in the technical installation, tasks associated with the engineering project as a whole and the like. For example, the engineering actions may be as simple as open engineering project file, close engineering project file, import or export function block, modify parameter values associated with the one or more asset(s) and the like.

The method comprises generating one or more connections between the determined one or more engineering objects based on the identified sequence. The method comprises determining one or more parameter values associated with the one or more engineering objects. The one or more parameter values associated with the one or more engineering objects comprises hardware configuration settings, tag information settings, software parameter setting, communication channel settings and the like.

Further, the method comprises generating the engineering workflow for performing the engineering process in the engineering project based on the determined one or more parameter values associated with the one or more engineering objects and the generated one or more connections between the determined one or more engineering objects.

In generating the engineering workflow for performing the engineering process in the engineering project based on the determined one or more engineering objects, the method comprises generating virtual instances of the determined one or more engineering objects in a virtual environment based the engineering process in the engineering project. Further, the method comprises generating engineering workflow for performing the engineering process in the engineering project based on the generated virtual instances of the determined one or more engineering objects. Furthermore, the method comprises storing the virtual instances as engineering object templates in a remote memory.

Further, the method comprises automatically compiling the generated workflow for performing the engineering process in the engineering project. Also, the method comprises deploying the compiled engineering workflow in real time to the one or more hardware component(s) of the technical installation.

In generating the modified engineering project based on the generated engineering workflow by performing the engineering process in the engineering project on the visual platform, the method comprises performing the sequence of engineering actions associated with the determined one or more engineering objects based on the generated engineering workflow. The engineering actions comprises modification to at least one part of the one or more engineering objects and defining a functionality for the one or more engineering objects. Further, the method comprises generating the modified engineering project based on the sequence of engineering actions performed.

In outputting the generated engineering workflow and the modified engineering project on the graphical user interface, the method comprises displaying the generated engineering workflow and the modified engineering project on the graphical user interface.

The object of the present invention is also achieved by an automation engineering management system. The automation engineering management system comprises one or more processor(s) and a memory coupled to the processor. The memory comprises an automation module stored in the form of machine-readable instructions executable by the processor. The automation module is configured for performing the method as described above.

The object of the present invention is also achieved by a cloud computing system comprising a server and a cloud platform comprising an automation engineering management system stored therein in the form of machine-readable instructions executable by the server. The automation engineering management system is configured to perform the method as described above.

The object of the present invention is also achieved by a cloud computing environment. The cloud computing environment comprising a cloud computing system, a technical installation comprising one or more assets and at least one engineering system communicatively coupled to the cloud computing system and the technical installation.

The object of the present invention is also achieved by a computer-program product having machine-readable instructions stored therein, that when executed by one or more server(s), cause the one or more server(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a cloud computing environment capable of managing engineering workflows, according to an embodiment of the present invention;
- FIG 2: is a block diagram of an automation engineering management system, such as those shown in FIG 1, in which an embodiment of the present invention can be implemented;
- FIG 3: is a block diagram of an automation module, such as those shown in FIG 1 and FIG 2, in which an embodiment of the present invention can be implemented;
- FIG 4: is a process flowchart illustrating an exemplary method of managing engineering workflows in a cloud computing environment, according to an embodiment of the present invention;
- FIG 5: is an exemplary schematic representation of visual platform providing a user interface for generating engineering workflows, according to an embodiment of the present invention;
- FIG 6: is a screenshot of an exemplary one or more engineering objects in an engineering project associated with a technical installation, according to an embodiment of the present invention; and
- FIG 7: is a screenshot of an exemplary engineering workflow generated using the visual platform, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

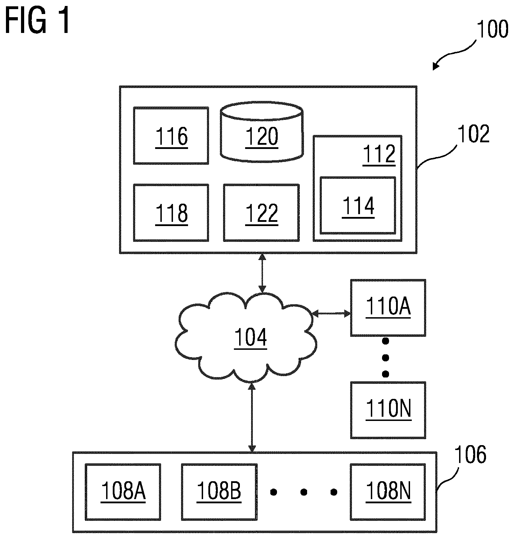

FIG 1 is a schematic representation of a cloud computing environment 100 capable of managing engineering workflows, according to an embodiment of the present invention. Particularly, FIG 1 depicts a cloud computing system 102 which is capable of delivering cloud applications for managing a technical installation 106 comprising one or more asset(s) 108AN. As used herein, "cloud computing environment" refers to a processing environment comprising configurable computing physical and logical resources, for example, networks, servers, storage, applications, services, etc., and data distributed over the cloud platform. The cloud computing environment 100 provides on-demand network access to a shared pool of the configurable computing physical and logical resources. In an embodiment, the technical installation 106 may comprise a plant or an industry.

The cloud computing system 102 is connected to the one or more asset(s) 108A-N in the technical installation 106 via a network 104 (e.g., Internet). The one or more asset(s) 108A-N may include servers, robots, switches, automation devices, programmable logic controllers (PLC)s, human machine interfaces (HMIs), motors, valves, pumps, actuators, sensors and other industrial equipment (s). In a preferred embodiment, the one or more asset(s) 108A-N comprises a control device, such as the PLC(s). The cloud computing system 102 may be a public cloud, a private cloud, and/or a hybrid cloud configured to provide dedicated cloud services to its users. Although, FIG 1 illustrates the cloud computing system 102 connected to one technical installation 106, one skilled in the art can envision that the cloud computing system 102 can be connected to several technical installations 106 located at different locations via the network 104.

Further, the cloud computing system 102 is also connected to user devices 110A-N via the network 104. The user devices 110A-N can access the cloud computing system 102 for automatically generating engineering workflows. In an embodiment, the user devices 110A-N comprises an engineering system capable of running an industrial automation application (also referred as 'engineering application' or 'engineering tool' herein). The user devices 110A-N can be a laptop computer, desktop computer, tablet computer, smartphone and the like. The user devices 110AN can access cloud applications (such as providing performance visualization of the one or more asset (s) 108A-N) via a web browser.

Throughout the specification, the terms "user devices" and "engineering systems" are used interchangeably.

The cloud computing system 102 comprises a cloud platform 112, an automation engineering management system 114, a server 116 including hardware resources and an operating system (OS), a network interface 118 and a database 120. The network interface 118 enables communication between the cloud computing system 102, the technical installation 106, and the engineering system(s) 110A-N. Also, the network interface 118 enables communication between the cloud computing system 102 and the engineering system(s) 110A-N. The cloud interface (not shown in FIG 1) may allow the engineers at the one or more engineering system(s) 110A-N to access engineering project files stored at the cloud computing system 102 and perform one or more actions on the engineering project files as same instance. The server 116 may include one or more servers on which the OS is installed. The servers 116 may comprise one or more processors, one or more storage devices, such as, memory units, for storing data and machine-readable instructions for example, applications and application programming interfaces (APIs) 122, and other peripherals required for providing cloud computing functionality. The cloud platform 112 is a platform which enables functionalities such as data reception, data processing, data rendering, data communication, etc. using the hardware resources and the OS of the servers 116 and delivers the aforementioned cloud services using the application programming interfaces 122 deployed therein. The cloud platform 112 may comprise a combination of dedicated hardware and software built on top of the hardware and the OS.

The database 120 stores the information relating to the technical installation 106 and the engineering system(s) 110A-N. The database 120 is, for example, a structured query language (SQL) data store or a not only SQL (NoSQL) data store. The database 120 is configured as cloud-based database implemented in the cloud computing environment 100, where computing resources are delivered as a service over the cloud platform 112. The database 120, according to another embodiment of the present invention, is a location on a file system directly accessible by the automation engineering management system 114. The database 120 is configured to store engineering project files, engineering objects, requirements of the technical installation 106, engineering workflows, engineering actions performed, simulation, compilation results, one or more virtual instances, parameter values associated with the one or more assets 108A-N, and the like. The database 120 is configured to store multiple versions of the engineering application. Each required version of the engineering application is setup as a separate virtual machine. A pool of such virtual machines is stored at the database 120. The engineering workflows thus generated are stored as an "app" in "workflow service store". The workflow service store is provided at the cloud computing environment 100. The workflow services are accessed/executed in two ways, one by means of a user interface provided by the engineering application at the cloud computing system 102 or by means of API's 122 exposed by the engineering application for programming usage or usage in another engineering workflow.

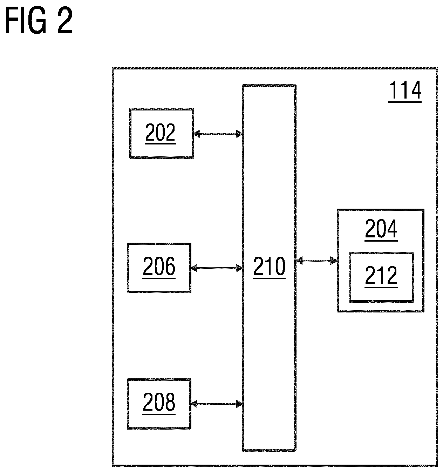

FIG 2 is a block diagram of an automation engineering management system 114, such as those shown in FIG 1, in which an embodiment of the present invention can be implemented. In FIG 2, the automation engineering management system 114 includes a processor(s) 202, an accessible memory 204, a communication interface 206, an input-output unit 208, and a bus 210.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor (s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an automation module 212 stored in the form of machine-readable instructions on any of the above-mentioned storage media and may be in communication with and executed by the processor(s) 202.

When executed by the processor(s) 202, the automation module 212 causes the processor(s) 202 to manage engineering workflow in a cloud computing environment 100. In an embodiment, the automation module 212 causes the processor(s) 202 to receive a request for performing an engineering process in an engineering project associated with a technical installation 106. Upon receiving the request, the automation module 212 causes the processor(s) 202 to determine one or more engineering objects required for performing the engineering process based on the received request. The one or more engineering objects represents one or more assets 108A-N in the technical installation 106. Further, the automation module 212 causes the processor(s) 202 to generate an engineering workflow for performing the engineering process in the engineering project based on the determined one or more engineering objects. The engineering workflow represents at least a portion of the engineering process. The engineering workflow comprises one or more connections between the one or more engineering objects. Also, the automation module 212 causes the processor(s) 202 to generate a modified engineering project based on the generated engineering workflow by performing the engineering process in the engineering project on a visual platform. Furthermore, the automation module 212 causes the processor(s) 202 to output the generated engineering workflow and the modified engineering project on a graphical user interface. The modified engineering project comprises modified one or more engineering objects.

In determining the one or more engineering objects required for performing the engineering process in the engineering project based on the received request, the automation module 212 causes the processor(s) 202 to identify requirement associated with the engineering process in the engineering project by parsing the received request. The requirement indicates the one or more engineering objects required for performing the engineering process. Further, the automation module 212 causes the processor(s) 202 to compare the engineering objects in the identified requirement with one or more pre-stored engineering objects. Also, the automation module 212 causes the processor(s) 202 to determine the one or more pre-stored engineering objects corresponding to the identified requirement based on the comparison.

In generating the engineering workflow for performing the engineering process in the engineering project based on the determined one or more engineering objects, automation module 212 causes the processor(s) 202 to identify a sequence of engineering actions required for performing the engineering process in the engineering project based on the determined one or more engineering objects. Further, the automation module 212 causes the processor(s) 202 to generate one or more connections between the determined one or more engineering objects based on the identified sequence. Also, the automation module 212 causes the processor(s) 202 to determine one or more parameter values associated with the one or more engineering objects. Further, the automation module 212 causes the processor(s) 202 to generate the engineering workflow for performing the engineering process in the engineering project based on the determined one or more parameter values associated with the one or more engineering objects and the generated one or more connections between the determined one or more engineering objects.

In generating the engineering workflow for performing the engineering process in the engineering project based on the determined one or more engineering objects, the automation module 212 causes the processor(s) 202 to generate virtual instances of the determined one or more engineering objects in a virtual environment based the engineering process in the engineering project. Also, the automation module 212 causes the processor(s) 202 to generate engineering workflow for performing the engineering process in the engineering project based on the generated virtual instances of the determined one or more engineering objects.

The automation module 212 causes the processor(s) 202 to store the virtual instances as engineering object templates in a remote memory.

Further, the automation module 212 causes the processor(s) 202 to automatically compile the generated workflow for performing the engineering process in the engineering project. Further, the automation module 212 causes the processor(s) 202 to deploy the compiled engineering workflow in real time to the one or more hardware component(s) of the technical installation 106.

In an embodiment, in generating the modified engineering project based on the generated engineering workflow by performing the engineering process in the engineering project on the visual platform, the automation module 212 causes the processor(s) 202 to perform the sequence of engineering actions associated with the determined one or more engineering objects based on the generated engineering workflow. The engineering actions comprises modification to at least one part of the one or more engineering objects and defining a functionality for the one or more engineering objects. Further, the automation module 212 causes the processor(s) 202 to generate the modified engineering project based on the sequence of engineering actions performed.

In outputting the generated engineering workflow and the modified engineering project on the graphical user interface, the automation module 212 causes the processor(s) 202 to display the generated engineering workflow and the modified engineering project on the graphical user interface.

The communication interface 206 is configured for establishing communication sessions between the one or more engineering systems 110A-N and the cloud computing system 102. The communication interface 206 allows the one or more engineering applications running on the engineering systems 110A-N to generate automated engineering workflows and download the modified engineering projects from the cloud computing system 102. In an embodiment, the communication interface 206 interacts with the interface at the one or more engineering systems 110A-N for allowing the engineers to access the engineering workflows in the engineering project file and perform one or more actions on the engineering workflows stored in the cloud computing system 102.

The input-output unit 208 may include input devices a keypad, touch-sensitive display, camera (such as a camera receiving gesture-based inputs), etc. capable of receiving one or more input signals, such as user commands to process engineering project file. Also, the input-output unit 208 may be a display unit for displaying a graphical user interface which visualizes the engineering workflows associated with the modified engineering project and also displays the status information associated with each set of actions performed on the engineering workflow. The set of actions may include execution of predefined tests, download, compile and deploy of engineering workflows. The bus 210 acts as interconnect between the processor 202, the memory 204, and the input-output unit 208.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a cloud computing system 102 as is unique to the present disclosure or necessary for an understanding of the present disclosure is depicted and described. The remainder of the construction and operation of the cloud computing system 102 may conform to any of the various current implementation and practices known in the art.

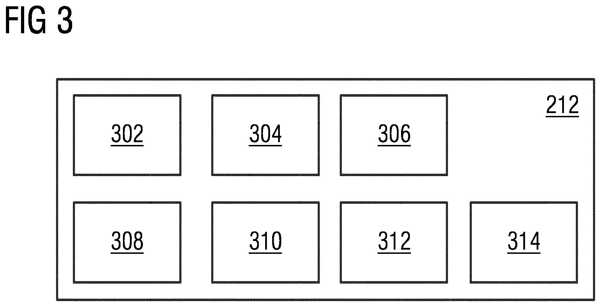

FIG 3 is a block diagram of an automation module 212, such as those shown in FIG. 1 and FIG.2, in which an embodiment of the present invention can be implemented. The automation module 212 comprises a request handler 302, an engineering object management module 304, an engineering workflow generation module 306, an engineering process execution module 308, an output module 310, a compilation and deployment module 312 and a database 314.

The request handler 302 is configured for receiving a request for performing an engineering process in an engineering project associated with a technical installation 106. The engineering process comprises a technical process within the technical installation 106. For example, the engineering process may be to auto correct naming conventions in an engineering project A. The engineering project comprises one or more engineering objects representing one or more asset(s) 108A-N deployed in the technical installation 106. The one or more engineering objects comprises a control program desired to be deployed on the asset(s) 108A-N in the technical installation 106. In an embodiment, the engineering project file comprises general configuration information such as hardware configuration and programming information such as programmable logic controller (PLC) control logic implementation.

The engineering object management module 304 is configured for determining one or more engineering objects required for performing the engineering process based on the received request. The one or more engineering objects represents one or more assets 108A-N in the technical installation 106. In an embodiment, the engineering objects are represented as visual platform Nodes, such as NODERED nodes. The one or more engineering objects represents a function associated with one or more hardware component(s) and software component. The one or more engineering objects comprises one or more parameter values associated with the hardware component(s) and software component(s). Examples of such function includes application open, application close, engineering project open, engineering project close, export tags, project auto correct tags, and the like. In order to determine the one or more engineering objects required for performing the engineering process, the engineering object management module 304 is configured for identifying requirement associated with the engineering process in the engineering project by parsing the received request. The requirement indicates the one or more engineering objects required for performing the engineering process. For example, the requirement may indicate to 'autocorrect the naming convention' of the engineering tags in the engineering project. Further, the engineering object management module 304 is configured for comparing the engineering objects in the identified requirement with one or more pre-stored engineering objects. For examples the one or more engineering objects in the requirement comprises export tags object, import tags object, project auto correct object, import blocks objects and the like. The one or more pre-stored engineering objects comprises the above said engineering objects plus a pool of engineering objects defined for performing various other engineering processes. Out of the one or more pre-stored engineering objects, only those of the one or more pre-stored engineering objects corresponding to the identified requirement are determined by the engineering object management module 304 based on the comparison. The determined one or more engineering objects are then provided to the engineering workflow generation module 306 as an input.

The engineering workflow generation module 306 is configured for generating an engineering workflow for performing the engineering process in the engineering project based on the determined one or more engineering objects. The engineering workflow represents at least a portion of the engineering process and the engineering workflow comprises one or more connections between the one or more engineering objects. Specifically, the engineering workflow comprises one or more engineering objects connected in a specified form to perform a specific engineering process. In order to generate the engineering workflow, the engineering workflow generation module 306 is configured for identifying a sequence of engineering actions required for performing the engineering process in the engineering project based on the determined one or more engineering objects. Each of the engineering actions are associated with the determined one or more engineering objects. The sequence of engineering actions may comprise tasks associated with the one or more asset(s) 108A-N in the technical installation 106, tasks associated with the engineering project as a whole and the like. For example, the engineering actions may be as simple as open engineering project file, close engineering project file, import or export function block, modify parameter values associated with the one or more asset(s) 108A-N and the like. In order to achieve this a http web service is written at the local engineering system 110A-N which wraps the existing workflow system to expose the workflow system functionalities via http protocol. This facility enables invoking one or more APIs 122 from remote locations, thus enabling remote invocation of engineering actions via remote engineering applications hosted at the cloud computing system 102.

Further, the engineering workflow generation module 306 is configured for generating one or more connections between the determined one or more engineering objects based on the identified sequence. For performing the engineering process based on the requirement as in the request, the engineering workflow generation module 306 is configured for first determining sequence of performing the engineering actions associated with the engineering objects and then generating the required one or more connections between such engineering objects. The connections between the one or more engineering objects must be logical. Further, the engineering workflow generation module 306 is configured for determining one or more parameter values associated with the one or more engineering objects. The one or more parameter values associated with the one or more engineering objects comprises hardware configuration settings, tag information settings, software parameter setting, communication channel settings and the like. Furthermore, the engineering workflow generation module 306 is configured for generating the engineering workflow for performing the engineering process in the engineering project based on the determined one or more parameter values associated with the one or more engineering objects and the generated one or more connections between the determined one or more engineering objects.

In an embodiment, the engineering workflow generation module 306 is configured for generating virtual instances of the determined one or more engineering objects in a virtual environment based the engineering process in the engineering project. In an embodiment, the virtual environment may comprise one or more virtual asset(s). The virtual environment emulates an actual technical installation, such as technical installation 106. Similarly, the virtual asset(s) in the virtual environment emulates the actual asset(s) 108A-N. Further, the virtual environment may be a virtual setup of the actual technical installation 106. The virtual environment is comprised in the compilation and deployment module 312.

Further, the engineering workflow generation module 306 is configured for generating engineering workflow for performing the engineering process in the engineering project based on the generated virtual instances of the determined one or more engineering objects. The generated engineering workflow is then provided as an input to the engineering process execution module 308.

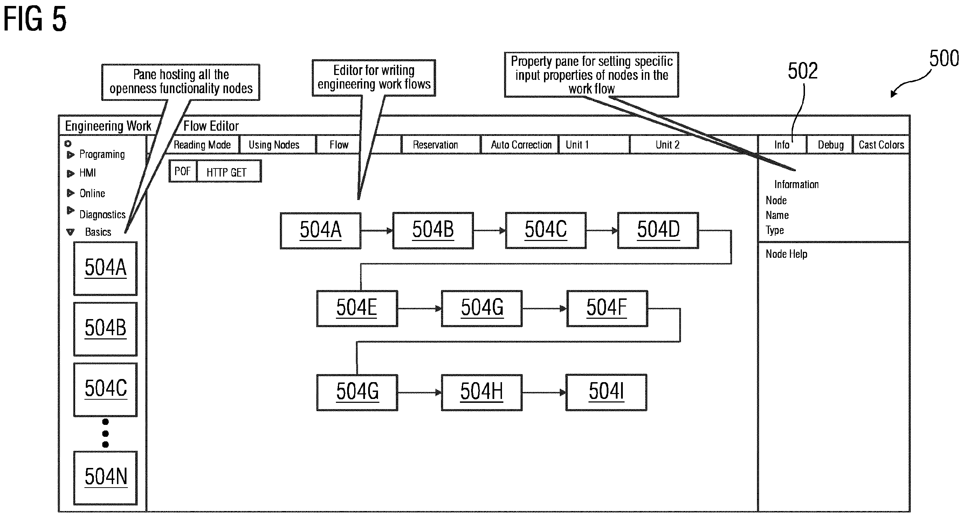

The engineering process execution module 308 is configured for generating a modified engineering project based on the generated engineering workflow by performing the engineering process in the engineering project on a visual platform. The visual platform may be a for example, a Node Red Platform. The visual platform is a flow-based development tool for visual programming. The visual platform's browser-based flow editor allows determining specific 'nodes' which are engineering objects, each one dedicated for performing specific programming action. The nodes can be arranged as per the expected logic sequence by connecting output of one node as input to another node (explained in FIG. 5). The modified engineering project comprises the modified engineering object as defined in the generated engineering workflow. In order to generate the modified engineering project, the engineering process execution module 308 is configured for performing the sequence of engineering actions associated with the determined one or more engineering objects based on the generated engineering workflow. The engineering actions comprises modification to at least one part of the one or more engineering objects and defining a functionality for the one or more engineering objects. For example, the engineering actions comprises modifying control programs associated with the one or more engineering objects, modifying parameter values associated with the one or more assets 108A-N, exporting or importing data exchange, and the like. The engineering process execution module 308 is further configured for generating the modified engineering project based on the sequence of actions performed. The generated modified engineering project is provided as an input to the output module 310.

The output module 310 is configured for outputting the generated engineering workflow and the modified engineering project on a graphical user interface. The modified engineering project comprises modified one or more engineering objects. In an embodiment, the output module 310 is configured for displaying the engineering workflow and the modified engineering project on the graphical user interface. Further, the output module 310 is configured for generating status messages during compilation, simulation, download and deployment. Further, the output module 310 is configured for displaying the status message on the user interface. For example, during compilation, if there are any errors, the output module 310 generate the status message of this action accordingly and displays it on the user interface.

Similarly, during download and simulation if there are any errors, the output module 310 generate the status message accordingly and displays them on the user interface. In an embodiment, the output module 310 displays a user interface of the visual platform such as Node RED, providing the end user to auto generate engineering workflows. Further, the output module 310 is configured for displaying the test results and the simulation results on the user interface. The test results and the simulation results may also include graphical representations, such as heat maps depicting the status of asset(s) 108A-N upon execution of the modified engineering project.

The compilation and deployment module 312 are configured for automatically compiling the generated workflow for performing the engineering process in the engineering project and deploying the compiled engineering workflow in real time to the one or more asset(s) 108A-N of the technical installation 106. The compilation and deployment module 312 compiles the engineering project to verify the modified engineering project. When once the modified engineering project is verified to be successfully compiled and simulated on the virtual environment, the modified engineering project is deployed onto the asset(s) 108A-N of the technical installation 106. The compilation and deployment module 312 deploy the modified engineering project on the asset(s) 108A-N using internet protocol (IP) address of the asset(s) 108A-N.

The database 314 is configured to store the virtual instances as engineering object templates in a remote memory. Each of the engineering objects are virtual instances. These virtual instances are stored in the form of a templates that could be used or accessed by any engineering system 110A-N later for generating automated engineering workflows. A library consisting of such virtual instances is generated and stored in the database 314.

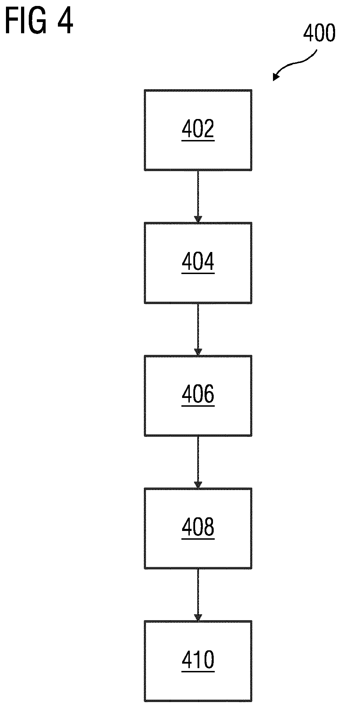

FIG 4 is a process flowchart illustrating an exemplary method 400 of managing engineering workflows in a cloud computing environment 102, according to an embodiment of the present invention. At step 402, a request for performing an engineering process in an engineering project associated with a technical installation 106 is received. At step 404, one or more engineering objects required for performing the engineering process are determined based on the received request. The one or more engineering objects represents one or more asset(s) 108A-N in the technical installation 106. At step 406, an engineering workflow for performing the engineering process in the engineering project is generated based on the determined one or more engineering objects. The engineering workflow represents at least a portion of the engineering process. The engineering workflow comprises one or more connections between the one or more engineering objects. At step 408, a modified engineering project is generated based on the generated engineering workflow by performing the engineering process in the engineering project on a visual platform. At step 410, the generated engineering workflow and the modified engineering project is outputted on a graphical user interface. The modified engineering project comprises modified one or more engineering objects.

FIG 5 is an exemplary schematic representation 500 of visual platform 502 providing a user interface for generating engineering workflows, according to an embodiment of the present invention. The visual platform 502 comprises the one or more UI panes enabling generation of engineering workflow. The UI panes comprises an editor pane, openness functionality nodes, and a property pane. One of the one or more user panes, which is the openness pane comprises one or more engineering objects 504A-N which are pre-stored in the database 314. When a request for generating an engineering workflow or performing an engineering process is received, the computing system 102 determines all the required engineering objects such as 504A-N and generates automatically the engineering workflow in a specific sequence as shown in FIG. 5. For example, if a request is received to auto correct the naming conventions in an engineering projects, all the engineering objects required among 504A-N is determined and is dynamically linked or connected in a sequential order to generate the engineering workflow as depicted. In this case, for example, the engineering object 504A may be to open engineering application or tool. The engineering object 504B may be to open specific engineering project. Similarly, the engineering object 504C may be to export blocks (export specific function blocks from a specific programmable logic controller (PLC) as XML files from opened engineering project), 504D may be to export tags, 504E may be to project auto correct, 505F may be to import tags, 504G may be to import blocks (Import specific function blocks in to a specific PLC of currently opened engineering project), 504H may be to save the project and 5041 may be to close the engineering project. In this way, an engineering workflow may be automatically generated.

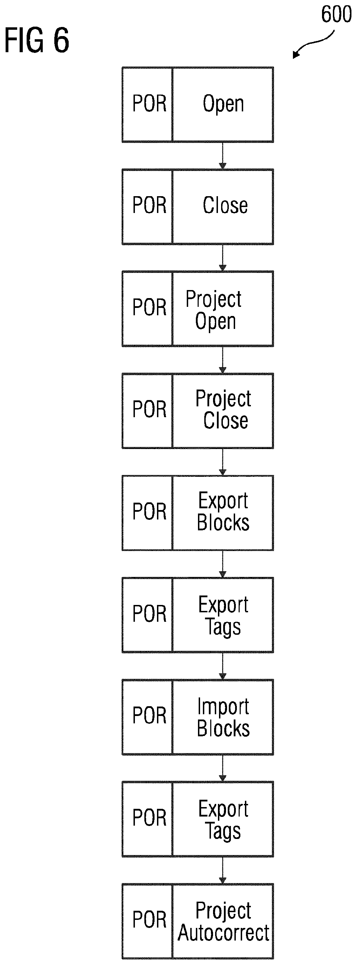

FIG 6 is a screenshot of an exemplary one or more engineering objects in an engineering project associated with a technical installation 106, according to an embodiment of the present invention. In FIG. 6, engineering objects such as engineering tool open, engineering tool close, engineering project open and close, export and import blocks, export and import tags, save engineering projects and the like are disclosed. Each of these engineering objects represents the function associated with one or more asset(s) 108A-N. Each of these engineering objects comprises control programs written in order to execute the said function. These control programs are modified while generating the modified engineering projects based on the requirement present in the received request.

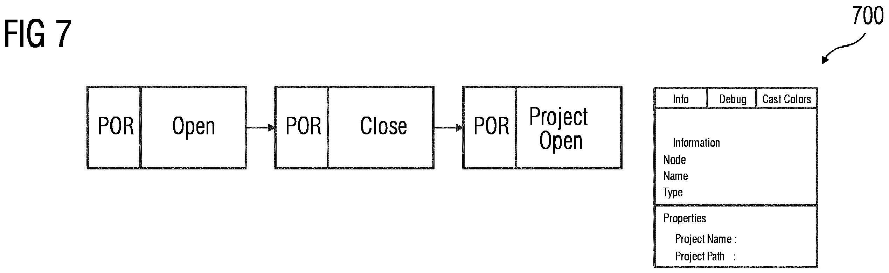

FIG 7 is a screenshot 700 of an exemplary engineering workflow generated using the visual platform, according to an embodiment of the present invention. In FIG. 7, an exemplary engineering workflow is generated for exporting tags of a specific asset 108A-N is depicted. While generating the engineering workflow, properties associated with each engineering object may be defined. For example, for the engineering object engineering project open, various properties such as information, type, node name, project path may be defined. Similarly, the properties vary from each type of engineering objects.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference Signs:

- 100: -cloud computing environment
- 102: -cloud computing system
- 104: -network
- 106: -technical installation
- 108: A-N- asset(s)
- 110: A-N-engineering system(s)
- 112: -cloud platform
- 114: -automation engineering management system
- 116: -server(s)
- 118: -network interface
- 120: -database
- 122: -Application programming interface(s) (APIs)
- 202: -processor(s)
- 204: -memory
- 206: -communication interface
- 208: -input-output unit
- 210: -bus
- 212: -automation module
- 302-: request handler
- 304-: an engineering object management module
- 306-: an engineering workflow generation module
- 308-: an engineering process execution module
- 310-: an output module
- 312-: a compilation and deployment module
- 314: -database
- 502: -visual platform
- 504: A-N-one or more engineering objects

## Claims

1. A method for managing engineering workflows in a cloud computing environment (100), the method comprising:
receiving, by a remote processor (202), a request for performing an engineering process in an engineering project associated with a technical installation (106);
determining, by the remote processor (202), one or more engineering objects required for performing the engineering process based on the received request, wherein the one or more engineering objects represents one or more asset(s) (108A-N) in the technical installation (106);
generating, by the remote processor (202), an engineering workflow for performing the engineering process in the engineering project based on the determined one or more engineering objects, wherein the engineering workflow represents at least a portion of the engineering process and wherein the engineering workflow comprises one or more connections between the one or more engineering objects;
generating, by the remote processor (202), a modified engineering project based on the generated engineering workflow by performing the engineering process in the engineering project on a visual platform (502); and
outputting, by the remote processor (202), the generated engineering workflow and the modified engineering project on a graphical user interface, wherein the modified engineering project comprises modified one or more engineering objects.

2. The method according to claim 1, wherein determining the one or more engineering objects required for performing the engineering process in the engineering project based on the received request comprises:
identifying requirement associated with the engineering process in the engineering project by parsing the received request, wherein the requirement indicates the one or more engineering objects required for performing the engineering process;
comparing the engineering objects in the identified requirement with one or more pre-stored engineering objects; and
determining the one or more pre-stored engineering objects corresponding to the identified requirement based on the comparison.

3. The method according to claim 1, wherein generating the engineering workflow for performing the engineering process in the engineering project based on the determined one or more engineering objects comprises:
identifying a sequence of engineering actions required for performing the engineering process in the engineering project based on the determined one or more engineering objects;
generating one or more connections between the determined one or more engineering objects based on the identified sequence;
determining one or more parameter values associated with the one or more engineering objects; and
generating the engineering workflow for performing the engineering process in the engineering project based on the determined one or more parameter values associated with the one or more engineering objects and the generated one or more connections between the determined one or more engineering objects.

4. The method according to claim 1, wherein generating the engineering workflow for performing the engineering process in the engineering project based on the determined one or more engineering objects comprises:
generating virtual instances of the determined one or more engineering objects in a virtual environment based the engineering process in the engineering project; and
generating engineering workflow for performing the engineering process in the engineering project based on the generated virtual instances of the determined one or more engineering objects.

5. The method according to claim 4, further comprising:
storing the virtual instances as engineering object templates in a remote memory.

6. The method according to claim 1, further comprising:
automatically compiling the generated workflow for performing the engineering process in the engineering project; and
deploying the compiled engineering workflow in real time to the one or more asset (s) (108A-N) of the technical installation (106).

7. The method according to claim 1, wherein generating the modified engineering project based on the generated engineering workflow by performing the engineering process in the engineering project on the visual platform (502) comprises:
performing the sequence of engineering actions associated with the determined one or more engineering objects based on the generated engineering workflow, wherein the engineering actions comprises modification to at least one part of the one or more engineering objects, and defining a functionality for the one or more engineering objects; and
generating the modified engineering project based on the sequence of engineering actions performed.

8. The method according to claim 1, wherein outputting the generated engineering workflow and the modified engineering project on the graphical user interface comprises:
displaying the generated engineering workflow and the modified engineering project on the graphical user interface.

9. An automation engineering management system (114) comprising:
one or more processor(s) (202); and
a memory (204) coupled to the one or more processor (s) (202), wherein the memory (204) comprises an automation module (212) stored in the form of machine-readable instructions executable by the one or more processor(s) (202), wherein the automation module (212) is capable of performing a method according to any of the claims 1-8.

10. A cloud computing system (102) comprising:
a server (116); and
a cloud platform (112) comprising an automation engineering management system (114) stored therein in the form of machine-readable instructions and executable by the at least one server (116), wherein the automation engineering management system (114) is configured to perform a method according claims 1-8.

11. A cloud computing environment (100) comprising:
a cloud computing system (102) according to claim 10;
a technical installation (106) comprising one or more assets (108A-N); and
at least one engineering system (110A-N) communicatively coupled to cloud computing system (102) and the technical installation (106).

12. A computer program product comprising machine-readable instructions stored therein, that when executed by one or more servers (116), cause the one or more servers (116) to perform a method according to any of the claims 1-8.
